# EUROPÄISCHE PATENTSCHRIFT

(11) **EP 4 238 898 B1**
(45) Veröffentlichungstag und Bekanntmachung des Hinweises auf die Patenterteilung: **21.05.2025**
(21) Anmeldenummer: 22159997.0
(22) Anmeldetag: 03.03.2022
(51) Int. Cl.: B65G 1/04, B65G 57/30

(54) **BLOCKLAGERANORDNUNG**
BLOCK STORAGE ASSEMBLY
ASSEMBLAGE DE STOCKAGE DE BLOCS

(43) Veröffentlichungstag der Anmeldung: 06.09.2023
(73) Patentinhaber: Jungheinrich Aktiengesellschaft, 22047 Hamburg (DE)
(72) Erfinder: Becker, Michael, 63512 Hainburg (DE); Cavelius, Jörg, 61118 Bad Vilbel (DE); Morawietz, Timm, 66636 Tholey-Überroth (DE); Liebhaber, Markus, 61440 Oberursel (DE)
(74) Vertreter: Keil & Schaafhausen Patentanwälte PartGmbB

(56) Entgegenhaltungen:
- EP-A1- 0 803 452
- EP-A1- 3 782 933
- EP-A1- 3 929 106
- EP-A1- 3 960 657
- WO-A1-2015/197709
- CN-A- 110 980 070
- DE-A1- 102019 130 345
- DE-A1- 2 252 584
- US-A- 3 964 619

## Beschreibung

Die vorliegende Erfindung betrifft eine Blocklageranordnung nach dem Oberbegriff des Anspruchs 1.

Weiterhin betrifft die vorliegende Erfindung ein Verfahren zum Betreiben einer Blocklageranordnung nach Anspruch 6.

Eine derartige Blocklageranordnung und ein Verfahren sind beispielsweise aus DE 22 52 584 A1 bekannt. Die DE 22 52 584 A1 offenbart die Merkmale des Oberbegriffs des Anspruchs 1.

Ein Blocklager beschreibt eine Lageranordnung mit wenigstens einem Behälterstapelraum, in den Blocklagerelemente, wie beispielsweise Behälter, ein-, um- und ausgelagert werden können. Dazu wird der Behälter ausgehend von dem Beschickungsraum in den Behälterstapelraum überführt bzw. aus dem Behälterstapelraum entnommen und in den Beschickungsraum überführt. Bei der Überführung von dem Beschickungsraum in den Behälterstapelraum oder andersherum passiert der Behälter jeweils die Durchgangsöffnung, die zwischen dem Behälterstapelraum und dem Beschickungsraum angeordnet ist. Die Überführung des Behälters durch die Durchgangsöffnung geschieht dabei stets in Schwerkraftrichtung. Wenn mehrere Behälter in einen Behälterstapelraum eingelagert werden, entsteht ein Behälterstapel. Weitere Bezeichnungen für das Blocklager sind Stapellager oder Behälterstapellager.

Die Halteanordnung kann zwei Positionen, eine Freigabeposition und eine Halteposition, einnehmen, wobei in der Halteposition ein Behälter bzw. ein Behälterstapel in dem Behälterstapelraum gehalten wird. Befindet sich Halteeinrichtung in der Freigabeposition, ist es möglich, einen oder mehrere Behälter aus dem Behälterstapelraum zu entnehmen. Die Anzahl der zu entnehmenden Behälter richtet sich nach der Anzahl der in dem Behälterstapelraum befindlichen Behälter. Auch kann ein oder mehrere Behälter in den Behälterstapelraum überführt werden, wenn die Halteeinrichtung in der Freigabeposition angeordnet ist. Eine weitere Blocklageranordnung ist aus US 3 964 619 A bekannt.

DE 10 2019 130 354 A1 beschreibt ein automatisiertes Lagersystem für Waren, bei dem die Waren in Behälter eingelagert werden können, die getrennt voneinander übereinander angeordnet sind. Die Behälter können in unterschiedlicher Weise unterteilt werden.

EP 3 929 106 A1 zeigt ein Verfahren zum Betreiben einer Lageranordnung, bei dem Behälter von unten in Behälteraufnahmeräume eingelagert und nach unten aus den Behälteraufnahmeräumen entnommen werden können.

WO 2015/197709 A1 zeigt eine weitere Blocklageranordnung, bei der Behälter von oben in Behälteraufnahmeräume eingelagert und aus den Behälteraufnahmeräumen nach oben entnommen werden können.

Es ist Aufgabe der vorliegenden Erfindung, eine Anordnung vorzuschlagen, durch die eine gute Flexibilität der Blocklageranordnung erreicht wird.

Diese Aufgabe wird durch die Merkmale des Anspruchs 1 und 6 gelöst. Vorteilhafte Ausgestaltungen ergeben sich aus den Unteransprüchen.

Die Blocklageranordnung der eingangs genannten Art weist mindestens zwei Durchgangsöffnungen mit unterschiedlichen Größen auf. Entsprechend ist es möglich, durch die unterschiedlich großen Durchgangsöffnungen unterschiedlich große Behälter einzulagern. Entsprechend können beispielsweise in einem ersten Behälter erste Artikel und in einem zweiten Behälter entsprechend zweite Artikel eingelagert werden, wobei die ersten Behälter durch erste Durchgangsöffnungen und die zweiten Behälter durch zweite Durchgangsöffnungen eingelagert und ausgelagert werden können. Die ersten Behälter sind beispielsweise kleiner als die zweiten Behälter. Ebenfalls können weitere unterschiedlich große Behälter durch entsprechende Durchgangsöffnungen ein- und ausgelagert werden, sodass die Erfindung auch auf mehr als zwei unterschiedlich große Durchgangsöffnungen anwendbar ist. Dadurch wird eine gute Flexibilität der Blocklageranordnung erreicht.

Im Beschickungsraum ist ein Beschickungsfahrzeug verfahrbar, das eine Hubeinrichtung aufweist, mit der ein Behälter aus dem Beschickungsraum in einem Behälterstapelraum einlagerbar oder aus dem Behälterstapelraum entnehmbar ist, wobei die Hubeinrichtung einseitig an einem Fahrgestell des Beschickungsfahrzeuges befestigt ist. Durch das Beschickungsfahrzeug kann ein Behälter automatisiert in einen Behälterstapelraum überführt werden. Dazu übernimmt das Beschickungsfahrzeug beispielsweise einen Behälter. Sobald das Beschickungsfahrzeug den Behälter aufgenommen hat, überführt das Beschickungsfahrzeug den Behälter ausgehend von dem Beschickungsraum in einen Behälterstapelraum. Auch kann das Beschickungsfahrzeug einen Behälter aus dem Behälterstapelraum entnehmen und zu einem Zielpunkt transportieren. Durch die einseitig angeordnete Hubeinrichtung wird ein kompaktes Beschickungsfahrzeug erreicht, was eine geringe Grundfläche aufweist. Durch den Einsatz eines Beschickungsfahrzeuges kann die Blocklageranordnung flexibel und automatisch betrieben werden.

Das Beschickungsfahrzeug ist ein erstes Beschickungsfahrzeug und ein zweites Beschickungsfahrzeug ist im Beschickungsraum synchronisiert mit dem ersten Beschickungsfahrzeug verfahrbar, wobei die Hubeinrichtung des ersten Beschickungsfahrzeugs der Hubeinrichtung des zweiten Beschickungsfahrzeugs gegenüberliegt. Durch diese Anordnung können die beiden Beschickungsfahrzeuge gemeinsam einen großen, zweiten Behälter verfahren und in einen Behälterstapelraum mit entsprechend großer Durchgangsöffnung überführen bzw. aus diesem entnehmen. Dazu übernehmen die beiden Beschickungsfahrzeuge gemeinsam den zweiten Behälter und überführen diesen zu einer Position unterhalb eines entsprechenden Behälterstapelraums. Dort angekommen entriegeln die beiden Beschickungsfahrzeuge eine Halteeinrichtung, so dass die Halteeinrichtung in die Freigabeposition überführt wird und der zweite Behälter in dem Behälterstapelraum durch die beiden Beschickungsfahrzeuge eingelagert werden kann. Sobald der zweite Behälter in dem Behälterstapelraum eingelagert ist, wird die Halteeinrichtung wieder in die Halteposition überführt, und der zweite Behälter auf der Halteeinrichtung abgelegt. Alternativ zum Transport des großen, zweiten Behälters durch die beiden Beschickungsfahrzeuge kann auch jedes Beschickungsfahrzeug einen kleinen, ersten Behälter alleine transportieren und in den Behälterstapelraum einlagern bzw. aus dem Behälterstapelraum entnehmen. Dieser Vorgang wird analog zu der Ein- und Auslagerung des großen, zweiten Behälters durchgeführt. Durch den Einsatz von mehreren Beschickungsfahrzeugen können entsprechend unterschiedlich große Behälter transportiert und durch entsprechend große Durchgangsöffnungen in Behälterstapelräume eingelagert werden. Entsprechend wird eine gute Flexibilität der Blocklageranordnung erreicht.

Vorzugsweise ist die Durchgangsöffnung eines jeden Behälterstapelraums an die Grundfläche des Behälterstapelraums angepasst. Durch die Anpassung der Durchgangsöffnung an die Grundfläche des Behälterstapelraums kann beispielsweise sichergestellt werden, dass nur Behälter bis zu einer bestimmten Größe in den entsprechenden Behälterstapelraum eingelagert werden können. Außerdem wird durch die Anpassung der Durchgangsöffnung erreicht, dass ein in dem Behälterstapelraum befindlicher Behälterstapel durch Begrenzungen des Behälterstapelraums ausreichend geführt ist, so dass ein Umfallen des Behälterstapels verhindert wird.

Vorzugsweise weist die Halteeinrichtung mindestens zwei Halteklinken auf, die einander diametral gegenüberliegen. Durch die Halteeinrichtung mit mindestens zwei Halteklinken werden die Behälter in dem Behälterstapelraum gehalten. Dabei werden die Halteklinken im Rahmen einer Einlagerung eines Behälters in eine Freigabeposition überführt. Sobald die Halteeinrichtung mit ihren Halteklinken in der Freigabeposition ist, kann ein Behälter in den Behälterstapelraum eingelagert werden. Wenn der Behälter innerhalb des Behälterstapelraums angeordnet ist, wird die Halteeinrichtung in eine Halteposition überführt, so dass der Behälter bzw. der Behälterstapel in dem Behälterstapelraum gehalten wird. Durch die Anordnung der Halteklinken diametral gegenüber wird der Behälter bzw. der Behälterstapel gut gehalten.

Vorzugsweise weisen die beiden Beschickungsfahrzeuge eine gemeinsame Steuerung auf. Durch die gemeinsame Steuerung der beide Beschickungsfahrzeuge wird eine einfache Steuerung beider Fahrzeuge erreicht, da diese als Verbund bzw. Tandem gesteuert werden können.

Vorzugsweise ist die Steuerung als Master/Slave-Steuerung ausgebildet. Durch die Master/Slave-Steuerung wird eins der beiden Beschickungsfahrzeuge als Master-Fahrzeug und entsprechend das andere als Slave-Fahrzeug gesteuert. Das Master-Fahrzeug ist der herrschende Teil, dem der Slave folgt. Dadurch richtet sich das Slave-Fahrzeug an dem Master-Fahrzeug aus, so dass eine einfache und genaue Steuerung beider Fahrzeuge möglich ist.

Weiterhin wird die oben genannte Aufgabe durch ein Verfahren gemäß Anspruch 6 gelöst.

Das Verfahren weist folgende Schritte auf:
a. Auswählen eines Behälterstapelraums in Abhängigkeit von der Größe des Behälters,
b. Einlagern wenigstens eines Behälters in den Behälterstapelraum ausgehend vom Beschickungsraum,
c. Entnehmen des wenigstens einen Behälters aus dem Behälterstapelraum in den Beschickungsraum.

Durch die unterschiedlich großen Durchgangsöffnungen können entsprechend unterschiedlich große Behälter in entsprechende Behälterstapelräume überführt werden. Dazu wird ein Behälter ausgehend vom Beschickungsraum in den Behälterstapelraum durch eine entsprechende Durchgangsöffnung überführt. Zur Entnahme des Behälters wird der Behälter ausgehend von dem Behälterstapelraum durch die Durchgangsöffnung hin zu dem Beschickungsraum hin überführt. Innerhalb der Behälterstapelräume werden die Behälter durch eine Halteeinrichtung gehalten. Wenn mehrere Behälter in einem Behälterstapelraum angeordnet sind, bilden diese einen Behälterstapel, der ebenfalls durch die Halteeinrichtung gehalten wird. Die Halteeinrichtung hält den Behälterstapel, wenn die Halteeinrichtung in einer Halteposition angeordnet ist. Wenn die Halteeinrichtung in einer Freigabeposition angeordnet ist, kann ein Behälter oder mehrere Behälter aus dem Behälterstapelraum entnommen werden und in den Beschickungsraum überführt werden. Durch den Einsatz der unterschiedlich großen Durchgangsöffnungen können unterschiedliche dimensionierte Behälter in entsprechenden Behälterstapelräumen eingelagert werden, so dass dadurch eine gute Flexibilität der Blocklageranordnung erreicht wird.

Die Schritte b. und c. werden durch wenigstens ein Beschickungsfahrzeug mit einer Hubeinrichtung durchgeführt, wobei die Hubeinrichtung einseitig an einem Fahrgestell des Beschickungsfahrzeuges angeordnet ist. Durch den Einsatz des Beschickungsfahrzeuges kann die Blocklageranordnung automatisiert betrieben werden, was zu einer guten Flexibilität führt. Durch die Anordnung der Hubanordnung an dem Fahrgestell des Beschickungsfahrzeuges wird ein Fußabdruck bzw. eine Grundfläche des Beschickungsfahrzeuges klein gehalten. Vorzugsweise betätigt das wenigstens eine Beschickungsfahrzeug die Halteeinrichtung. Durch die Betätigung der Halteeinrichtung durch das Beschickungsfahrzeug wird es ermöglicht, Behälter aus dem Behälterstapelraum zu entnehmen bzw. diesen zuzuführen. Dadurch werden Behälter innerhalb des Behälterstapelraumes sicher gehalten.

Vorzugsweise werden die Beschickungsfahrzeuge durch eine gemeinsame Steuerung gesteuert. Durch die gemeinsame Steuerung der beiden Beschickungsfahrzeuge wird eine einfache Steuerung beider Fahrzeuge erreicht. Dadurch wird ein Rechenaufwand bzw. Steuerungsaufwand geringgehalten. Vorzugsweise arbeitet die Steuerung basierend auf dem Master/Slave-Prinzip. Bei dem Master/Slave-Prinzip wird eines der beiden Beschickungsfahrzeuge, die gemeinsam einen großen Behälter transportieren, als Master-Fahrzeug ausgewählt und das andere ist entsprechend das Slave-Fahrzeug. Dabei übernimmt das Master-Fahrzeug die Führungsaufgabe, während das Slave-Fahrzeug dem Master-Fahrzeug folgt. Dadurch wird eine einfache Steuerung der beiden Fahrzeuge erreicht.

Die Erfindung wird im Folgenden anhand eines bevorzugten Ausführungsbeispiels in Verbindung mit der Zeichnung beschrieben. Hierin zeigen:
- Fig. 1: eine schematische Darstellung eines Beschickungsfahrzeuges
- Fig. 2: eine schematische Darstellung zweier Beschickungsfahrzeuge, die einen großen Behälter transportieren,
- Fig. 3: eine schematische Draufsicht auf eine Blocklageranordnung und
- Fig. 4: eine schematische Seitenansicht der Blocklageranordnung.

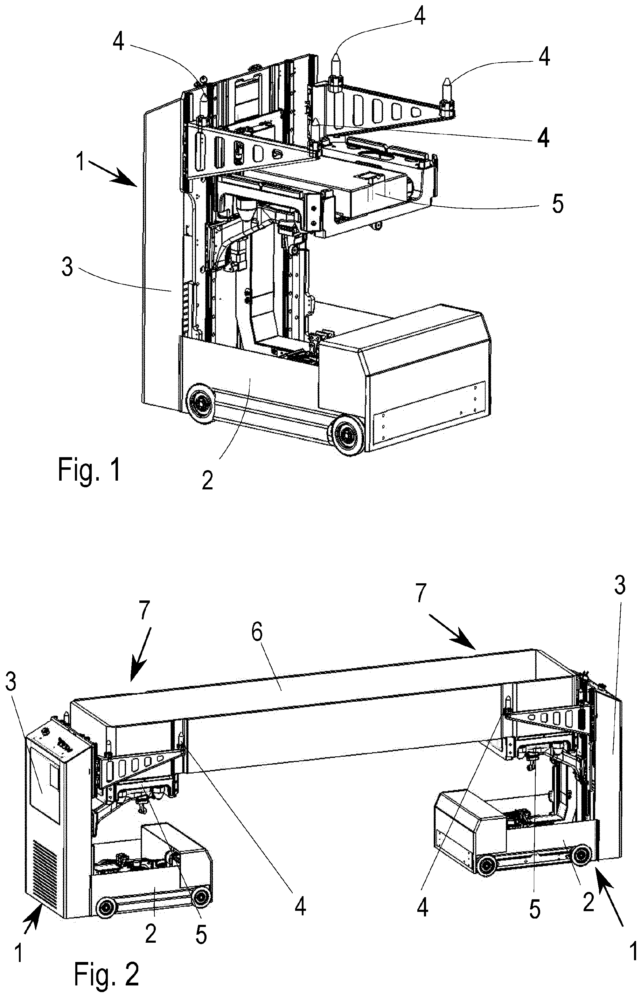

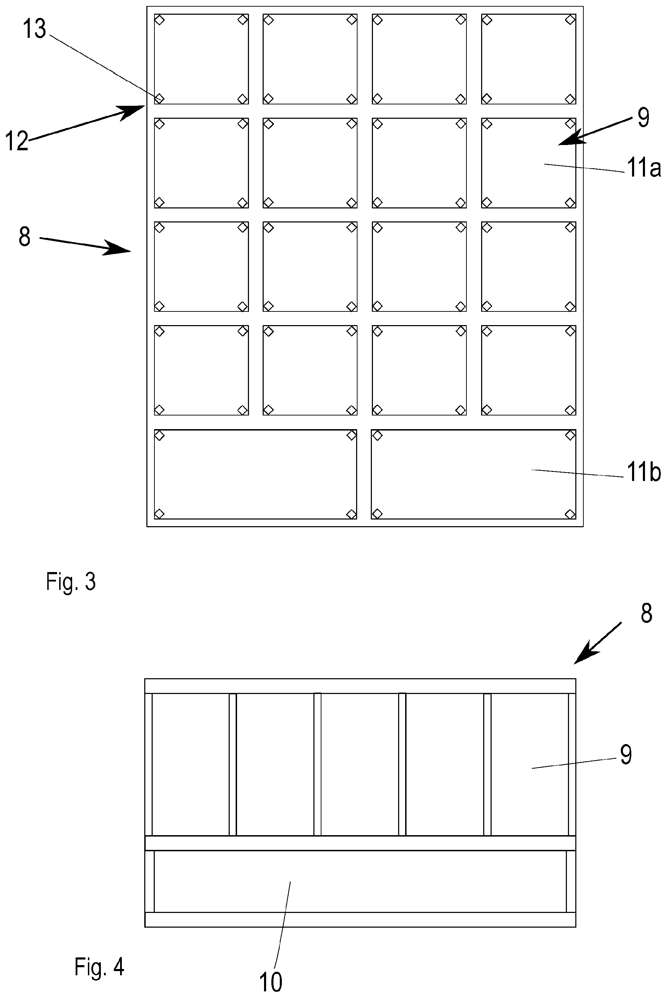

Fig.1 zeigt ein Beschickungsfahrzeug 1 mit einem Fahrgestell 2, an dem einseitig eine Hubeinrichtung 3 angeordnet ist. Weiterhin weist das Beschickungsfahrzeug 1 eine Freigabeeinrichtung 4 auf, durch die eine Halteeinrichtung 12 (Fig. 3) einer Blocklageranordnung 8 betätigt werden kann. Die Hubeinrichtung 3 weist eine Behälteraufnahme 5 auf, durch die ein in Fig. 1 nicht dargestellter Behälter aufgenommen werden kann.

Fig. 2 zeigt zwei Beschickungsfahrzeuge 1, die gemeinsam einen Behälter 6 aufnehmen. Dabei weist der Behälter 6 zwei Aufnahmebereiche 7 an jeweils zwei gegenüberliegenden Endbereichen des Behälters 6 auf, wobei die Aufnahmebereiche 7 mit der Behälteraufnahme 5 des Beschickungsfahrzeugs 1 interagieren können.

Die Beschickungsfahrzeuge 1 und der Behälter 6 kommen in der Blocklageranordnung 8 zum Einsatz. Die Blocklageranordnung 8 weist mehrere Behälterstapelräume 9 und einen in Schwerkraftrichtung unterhalb der Behälterstapelräume 9 angeordneten Beschickungsraum 10 auf. Dabei ist zwischen jedem Behälterstapelraum 9 und dem Beschickungsraum 10 eine Durchgangsöffnung 11a, 11b angeordnet, durch die ein Behälter aus dem Beschickungsraum 10 in den Behälterstapelraum 9 oder aus dem Behälterstapelraum 9 in den Beschickungsraum 10 überführt werden kann. Dabei weist die Durchgangsöffnung 11a, 11b eine Halteeinrichtung 12 auf, die durch den Freigabemechanismus 4 des Beschickungsfahrzeugs 1 betätigt werden kann. Durch die Freigabeeinrichtung 4 können Halteklinken 13 der Halteeinrichtung 12 ausgehend von einer Freigabeposition in eine Halteposition und umgekehrt überführt werden. In der Halteposition hält die Halteeinrichtung 12 die in dem Behälterstapelraum 9 befindlichen Behälter, wobei mehrere Behälter einen Behälterstapel bilden. In der Freigabeposition hingegen kann ein Behälter in den Behälterstapelraum 9 überführt werden und aus diesem Behälterstapelraum 9 auch wieder entnommen werden. Die Halteeinrichtung 12 weist dazu zwei oder mehr Halteklinken 13 auf, die beispielsweise einander diametral gegenüberliegen. Entsprechend der Anordnung der Halteklinken 13 ist die Freigabeeinrichtung 4 ausgestaltet.

Zwischen dem Behälterstapelraum 9 und dem Beschickungsraum ist, wie erwähnt, jeweils eine Durchgangsöffnung 11a, 11b angeordnet. An diese Durchgangsöffnung 11a, 11b ist eine Grundfläche des Behälterstapelraums 9 angepasst. Mindestens zwei der Durchgangsöffnungen 11a, 11b haben unterschiedliche Größen, so dass unterschiedlich große Behälter durch entsprechende Durchgangsöffnungen 11a, 11b in passende Behälterstapelräume 9 ein- und ausgelagert werden können.

So können erste Behälter durch erste Durchgangsöffnungen 11a und zweite Behälter 6 durch zweite Durchgangsöffnungen 11b ein- und ausgelagert werden. Dieser Vorgang wird mit Hilfe von einem oder mehreren Beschickungsfahrzeugen 1 durchgeführt. Erste Behälter werden von einem Beschickungsfahrzeug 1 und zweite Behälter 6 von zwei Beschickungsfahrzeugen 1 transportiert, also eingelagert, ausgelagert und umgelagert. Die zweiten Behälter 6 sind beispielsweise größer als die ersten Behälter ausgeführt.

Beispielsweise können mehrere erste Behälter von jeweils einem der Beschickungsfahrzeuge 1 transportiert werden, wobei die gleichen Beschickungsfahrzeuge 1 anschließend im Verbund bzw. Tandem zweite Behälter 6 transportieren. Entsprechend können Beschickungsfahrzeuge 1 auch erst zweite Behälter 6 und anschließend erste Behälter transportieren.

Wie in Fig. 2 dargestellt, können zwei Beschickungsfahrzeuge 1 einen großen Behälter 6 aufnehmen. Dazu werden die beiden Beschickungsfahrzeuge 1 entsprechend angeordnet, so dass die Behälteraufnahmen 5 der jeweiligen Beschickungsfahrzeuge 1 mit Aufnahmebereichen 7 des Behälters 6 zusammenwirken können. Die Beschickungsfahrzeuge 1 sind dabei so angeordnet, dass die Hubeinrichtungen 3 der Beschickungsfahrzeuge 1 nach außen zeigen, während die Behälteraufnahmen 5 der Beschickungsfahrzeuge einander zugewandt sind. Sobald die beiden Beschickungsfahrzeuge 1 einen Behälter 6 aufgenommen haben, verfahren diese synchron. Das bedeutet, dass der Behälter 6 synchron angehoben, abgesenkt bzw. verfahren wird. Dabei werden die beiden Beschickungsfahrzeuge durch eine gemeinsame Steuerung gesteuert. Durch die gemeinsame Steuerung agieren die beiden Beschickungsfahrzeuge 1 als Einheit, so dass eine einfache Steuerung realisierbar ist. Weiterhin kann die Steuerung beispielsweise als Master/Slave-Steuerung ausgebildet sein. Bei der Master/Slave-Steuerung wird eins der beiden Beschickungsfahrzeuge 1 als Master und entsprechend das andere als Slave ausgewählt. Dabei orientiert sich das Slave-Beschickungsfahrzeug 1 am Master-Beschickungsfahrzeug 1.

### Bezugszeichenliste

- 1: Beschickungsfahrzeug
- 2: Fahrgestell
- 3: Hubeinrichtung
- 4: Freigabeeinrichtung
- 5: Behälteraufnahme
- 6: Behälter
- 7: Aufnahmebereich
- 8: Blocklageranordnung
- 9: Behälteraufnahmeraum
- 10: Beschickungsraum
- 11: Durchgangsöffnung
- 12: Halteeinrichtung
- 13: Halteklinke

## Patentansprüche

1. Blocklageranordnung mit mehreren Behälterstapelräumen und einem in Schwerkraftrichtung unterhalb der Behälterstapelräume angeordneten Beschickungsraum, wobei zwischen jedem Behälterstapelraum und dem Beschickungsraum eine Durchgangsöffnung angeordnet ist, durch die ein Behälter (6) aus dem Beschickungsraum in den Behälterstapelraum oder aus dem Behälterstapelraum in den Beschickungsraum bewegbar ist und die eine Halteeinrichtung aufweist, **wobei** mindestens zwei Durchgangsöffnungen unterschiedliche Größen haben, **dadurch gekennzeichnet, dass** im Beschickungsraum ein erstes Beschickungsfahrzeug (1) und ein zweites Beschickungsfahrzeug (1) synchronisiert mit dem ersten Beschickungsfahrzeug (1) verfahrbar sind, wobei die Beschickungsfahrzeuge (1) jeweils eine Hubeinrichtung (3) aufweisen, mit der ein Behälter (6) aus dem Beschickungsraum in einen Behälterstapelraum einlagerbar oder aus dem Behälterstapelraum entnehmbar ist, wobei die Hubeinrichtung (3) einseitig an einem Fahrgestell (2) des Beschickungsfahrzeugs befestigt ist und die Hubeinrichtung (3) des ersten Beschickungsfahrzeugs (1) der Hubeinrichtung (3) des zweiten Beschickungsfahrzeugs (1) gegenüberliegt.

2. Blocklageranordnung nach Anspruch 1, **dadurch gekennzeichnet, dass** die Durchgangsöffnung eines jeden Behälterstapelraums an die Grundfläche des Behälterstapelraums angepasst ist.

3. Blocklageranordnung nach Anspruch 1 oder 2, **dadurch gekennzeichnet, dass** die Halteeinrichtung mindestens zwei Halteklinken aufweist, die einander diametral gegenüberliegen.

4. Blocklageranordnung nach einem der Ansprüche 1 bis 3, **dadurch gekennzeichnet, dass** die beiden Beschickungsfahrzeug (1) eine gemeinsame Steuerung aufweisen.

5. Blocklageranordnung nach Anspruch 4, **dadurch gekennzeichnet, dass** die Steuerung als Master/Slave-Steuerung ausgebildet ist.

6. Verfahren zum Betreiben einer Blocklageranordnung nach einem der Ansprüche 1-5 mit mehreren Behälterstapelräumen und einem in Schwerkraftrichtung unterhalb der Behälterstapelräume angeordnetem Beschickungsraum, wobei zwischen jedem Behälterstapelraum und dem Beschickungsraum eine Durchgangsöffnung angeordnet ist, die eine Halteeinrichtung aufweist, wobei mindestens zwei Durchgangsöffnungen unterschiedliche Größen haben, wobei Verfahren folgende Schritte umfasst:
a. Auswählen eines Behälterstapelraums in Abhängigkeit von der Größe des Behälters (6),
b. Einlagern wenigstens eines Behälters (6) in den Behälterstapelraum ausgehend von dem Beschickungsraum,
c. Entnehmen des wenigstens einen Behälters (6) aus dem Behälterstapelraum in den Beschickungsraum,
wobei die Schritte b und c durch wenigstens ein Beschickungsfahrzeug (1) mit einer Hubeinrichtung (3) durchgeführt werden, wobei die Hubeinrichtung einseitig an einem Fahrgestell (2) des Beschickungsfahrzeuges (1) angeordnet ist.

7. Verfahren nach Anspruch 6, **dadurch gekennzeichnet, dass** das wenigstens eine Beschickungsfahrzeug (1) die Halteeinrichtung betätigt.

8. Verfahren nach Anspruch 6 oder 7, **dadurch gekennzeichnet, dass** die Beschickungsfahrzeuge (1) durch eine gemeinsame Steuerung gesteuert werden.

9. Verfahren nach einem der Ansprüche 8, **dadurch gekennzeichnet, dass** die Steuerung basierend auf dem Master/Slave-Prinzip arbeitet.

## Claims

1. Block storage assembly with several container stacking spaces and a loading space arranged in the direction of gravity below the container stacking spaces, wherein between each container stacking space and the loading space is arranged a passage opening through which a container (6) can be moved from the loading space into the container stacking space or out of the container stacking space into the loading space and which has a holding device, wherein at least two passage openings have different sizes, **characterized in that** a first loading vehicle (1) and a second loading vehicle ( 1) can be moved in synchronization with the first loading vehicle (1), wherein the loading vehicles (1) each have a lifting device (3) with which a container (6) can be stored from the loading space into a container stacking space or removed from the container stacking space , wherein the lifting device (3) is attached on one side to a chassis (2) of the loading vehicle and the lifting device (3) of the first loading vehicle (1) is located opposite the lifting device (3) of the second loading vehicle (1).

2. Block storage assembly according to claim 1, **characterized in that** the passage opening of each container stacking space is adapted to the base area of the container stacking space.

3. Block storage assembly according to claim 1 or 2, **characterized in that** the holding device has at least two holding latches that are diametrically opposed to each other.

4. Block storage assembly according to one of claims 1 to 3, **characterized in that** the two loading vehicles (1) have a common control system.

5. Block storage assembly according to claim 4, **characterized in that** the control system is designed as a master/slave control system.

6. Method for operating a block storage assembly according to any of claims 1 to 5 having a plurality of container stacking spaces and a loading space arranged in the direction of gravity beneath the container stacking spaces, a passage opening which has a holding device being arranged between each container stacking space and the loading space, at least two passage openings having different sizes, wherein the method comprises the following steps:
a. selecting a container stacking space as a function of the size of the container (6),
b. storing at least one container (6) in the container stacking space starting from the loading space,
c. removing the at least one container (6) from the container stacking space into the loading space,
steps b and c being carried out by at least one loading vehicle (1) having a lifting device (3), the lifting device being arranged on one side of a chassis (2) of the loading vehicle (1).

7. A method according to claim 6, **characterized in that** the at least one charging vehicle (1) actuates the holding device.

8. A method according to claim 6 or 7, **characterized in that** the charging vehicles (1) are controlled by a common control system.

9. A method according to claim 8, **characterized in that** the control operates based on the master/slave principle.

## Revendications

1. Assemblage de stockage de blocs avec plusieurs espaces d'empilement de conteneurs et un espace de chargement disposé en direction de la force de gravité en dessous des espaces d'empilement de conteneurs, sachant qu'une ouverture de passage est disposée entre chaque espace d'empilement de conteneurs et l'espace de chargement, à travers laquelle un conteneur (6) peut être déplacé de l'espace de chargement dans l'espace d'empilement de conteneurs ou de l'espace d'empilement de conteneurs dans l'espace de chargement et qui comporte un système de maintien, sachant qu'au moins deux ouvertures de passage possèdent des tailles différentes, **caractérisé en ce qu'**un premier véhicule de chargement (1) et un deuxième véhicule de chargement (1) peuvent être déplacés dans l'espace de chargement en synchronisation avec le premier véhicule de chargement (1), sachant que les véhicules de chargement (1) comportent respectivement un système de levage (3) avec lequel un conteneur (6) peut être entreposé de l'espace de chargement dans un espace d'empilement de conteneurs ou prélevé de l'espace d'empilement de conteneurs, sachant que le système de levage (3) est fixé unilatéralement sur un châssis mobile (2) du véhicule de chargement et le système de levage (3) du premier véhicule de chargement (1) est opposé au système de levage (3) du deuxième véhicule de chargement (1).

2. Assemblage de stockage de blocs selon la revendication 1, **caractérisé en ce que** l'ouverture de passage de chaque espace d'empilement de conteneurs est adaptée à la surface de base de l'espace d'empilement de conteneurs.

3. Assemblage de stockage de blocs selon la revendication 1 ou 2, **caractérisé en ce que** le système de maintien comporte au moins deux verrous de maintien, qui s'opposent diamétralement l'un à l'autre.

4. Assemblage de stockage de blocs selon l'une quelconque des revendications 1 à 3, **caractérisé en ce que** les deux véhicules de chargement (1) comportent une commande commune.

5. Assemblage de stockage de blocs selon la revendication 4, **caractérisé en ce que** la commande est constituée sous la forme d'une commande Maître/Esclave.

6. Procédé destiné à faire fonctionner un assemblage de stockage de blocs selon l'une quelconque des revendications 1-5, avec plusieurs espaces d'empilement de conteneurs et un espace de chargement disposé dans la direction de la force de gravité en dessous des espaces d'empilement de conteneurs, sachant qu'une ouverture de passage est disposée entre chaque espace d'empilement de conteneurs et l'espace de chargement, qui comporte un système de maintien, sachant qu'au moins deux ouvertures de passage possèdent des tailles différentes, sachant que le procédé comprend les étapes suivantes :
a. sélection d'un espace d'empilement de conteneurs en fonction de la taille du conteneur (6),
b. entreposage d'au moins un conteneur (6) dans l'espace d'empilement de conteneurs en partant de l'espace de chargement,
c. prélèvement d'au moins un conteneur (6) de l'espace d'empilement de conteneurs dans l'espace de chargement,
sachant que les étapes b et c sont exécutées par au moins un véhicule de chargement (1) avec un système de levage (3), sachant que le système de levage est disposé unilatéralement sur un châssis mobile (2) du véhicule de chargement (1).

7. Procédé selon la revendication 6, **caractérisé en ce qu'**au moins un véhicule de chargement (1) actionne le système de maintien.

8. Procédé selon la revendication 6 ou 7, **caractérisé en ce que** les véhicules de chargement (1) sont commandés par une commande commune.

9. Procédé selon la revendication 8, **caractérisé en ce que** la commande fonctionne en se basant sur le principe Maître/Esclave.
